Europäisches Patentamt

(19) European Patent Office

Office européen des brevets

(11) Numéro de publication: **0 143 019**

**A1**

## (12) DEMANDE DE BREVET EUROPEEN

(21) Numéro de dépôt: 84401865.5

(22) Date de dépôt: 20.09.84

(51) Int. Cl.⁴: **F 16 B 15/00**
E 04 B 1/49

(30) Priorité: 27.09.83 FR 8315348
11.09.84 FR 8413914

(43) Date de publication de la demande:
29.05.85 Bulletin 85/22

(84) Etats contractants désignés:
AT BE CH DE FR GB IT LI LU NL SE

(71) Demandeur: Ordronneau, Jean-Paul
Chemin du Baudu
F-85300 Challans(FR)

(72) Inventeur: Ordronneau, Jean-Paul
Chemin du Baudu
F-85300 Challans(FR)

(74) Mandataire: Derambure, Christian et al,
Cabinet BUGNION ASSOCIES SARL 116, boulevard
Haussmann
F-75008 Paris(FR)

(54) Pièce pour la réalisation d'un assemblage d'éléments de bois, procédé d'assemblage d'éléments de bois avec une telle pièce, et élément de bois pour la mise en oeuvre de ce procédé avec cette pièce.

(57) L'invention concerne une pièce pour la réalisation d'un assemblage de deux éléments de bois.

Elle comporte au moins une première languette plane saillante, prolongée par au moins un ergot plan en saillie sur son bord libre, prévue pour être introduite dans une gorge de l'un des éléments de bois; au moins une seconde languette plane saillante prolongée par au moins une seconde languette plane saillante prolongée par au moins un ergot plan en saillie sur son bord libre, prévue pour être introduite dans une gorge de l'autre élément de bois; et des moyens pour maintenir les première et seconde languettes dans une orientation prédéterminée l'une par rapport à l'autre.

Applicable a la mensiuserie

EP 0 143 019 A1

./...

FIG.5

<u>Pièce pour la réalisation d'un assemblage d'éléments de bois,</u>
<u>procédé d'assemblage d'éléments de bois avec une telle pièce,</u>
<u>et élément de bois pour la mise en  oeuvre de ce procédé avec</u>
<u>cette pièce.</u>

L'invention concerne une pièce pour la réalisation d'un assemblage de deux éléments de bois, un procédé d'assemblage d'éléments de bois avec une telle pièce et un élément de bois pour réaliser un assemblage avec une telle pièce. Elle s'applique notamment à l'assemblage des montants et traverses d'un bâti de meuble ou à celui de planches pour la confection de panneaux.

Classiquement, en menuiserie, on réalise l'assemblage de deux éléments de bois par rainure et languette. Cette technique a connu des perfectionnements : au lieu de réaliser un tenon classique, ce qui est délicat, on a rapporté une fausse languette dans un logement ménagé dans l'élément à assembler. Pour optimiser la fabrication de meubles de tailles différentes à partir de profilés de bois standard, découpés à la demande, on a réalisé des mortaises sous forme de gorges continues. A la languette on a substitué une fausse languette  coopérant avec les deux rainures en regard ménagées dans les éléments. Cependant, dans tous les cas, il est nécessaire de renforcer la solidité de l'assemblage rainure-languette par un collage, opération gênante, source de problème et supportant mal le vieillissement. Plus gênant est l'usinage spécifique (coupe en onglet, réalisation d'un tenon, creusement d'une mortaise localisée) pouvant être rendu indispensable, et toujours difficile à réaliser par un utilisateur non expérimenté ou peu outillé. C'est pourquoi a été développée la technologie d'assemblage grâce à des pièces métalliques. Celles-ci sont soit fixées à l'extérieur des éléments à assembler ce qui a comme avantage la simplicité d'exécution et la possibilité d'un réglage continu des éléments entre eux mais l'inconvénient essentiel d'un manque d'esthétique, soit placées dans des logements ménagés dans les éléments à assembler. Cette dernière technologie qui constitue donc un développement de la technologie classique rainure et languette est illustrée par le brevet U.S. 2.569.532 qui décrit une pièce d'assemblage comprenant deux ailes perpendiculaires et triangulaires logées dans des logements complémentaires des éléments de bois et comportant des pointes venant s'enfoncer dans le bois. Cependant, cette forme de réalisation est d'abord limitée à un assemblage à équerre, ensuite nécessite un double usinage de l'élément de bois (coupe en onglet et réalisation d'un logement d'une part parfaitement localisé d'autre part exactement dimensionné) qui doit être fait par l'usager soi-même, ce qui est difficile, implique un outillage spécialisé et interdit un réglage en continu, enfin est d'une rigidité très limitée.

L'invention vise donc à remédier à ces inconvénients en permettant de réaliser un assemblage de deux éléments de bois avec des pièces d'assemblage telles que :
les pièces d'assemblage soient placées substantiellement à l'intérieur des éléments à assembler ce qui assure l'esthétique; les pièces d'assemblage soient rigides;

3

les éléments de bois n'ont pas à faire l'objet d'un usinage spécifique après coupe à longueur, du type coupe en onglet ou création d'un logement parfaitement localisé et dimensionné; les pièces d'assemblage suffisent à réaliser l'assemblage sans nécessiter de pièces complémentaires. Cela avec plusieurs possibilités d'assemblage (à équerre, coplanaire notamment), à partir d'éléments de bois standardisés simplement coupés à longueur et de pièces d'assemblage de nombre de types différents très limité.

Une pièce d'assemblage selon l'invention comporte donc une première et une seconde languette chacune plane, saillante, prolongée par au moins un ergot plan en saillie sur son bord libre, logées respectivement sur une gorge de chacun des deux éléments de bois à assembler; et des moyens pour maintenir les première et seconde languettes dans une orientation prédéterminée l'une par rapport à l'autre (notamment perpendiculaire ou coplanaire).

Un procédé d'assemblage d'éléments de bois à l'aide de telles pièces comprend les étapes suivantes : on ménage sur les éléments une gorge dans le sens des fibres du bois; cette phase faisant normalement partie intégrante de la fabrication des éléments; on assemble la pièce d'assemblage au premier élément en introduisant l'une des languettes et les ergots qui la prolongent dans la gorge de ce premier élément, puis en forçant les ergots qui la prolongent en pénétration dans le bois en fond de gorge; on assemble le premier élément et la pièce ainsi assemblés au second élément en introduisant l'autre languette et les ergots qui la prolongent dans la gorge de ce second élément puis en forçant les ergots en pénétration dans le bois en fond de gorge.

Le procédé d'assemblage comporte naturellement une coupe à longueur des éléments assemblés. Cette coupe est généralement droite et non en onglet et n'est pas suivie d'une phase d'usinage spécifique.

Un élément de bois propre à la confection d'assemblages à l'aide d'une telle pièce a une section sensiblement rectangulaire et s'étend sensiblement dans la direction des fibres du bois. Il comporte sur deux de ses faces adjacentes au moins deux gorges droites de profil identique, les deux gorges étant situées à la même distance des arêtes diagonalement opposées.

Les seules opérations d'usinage à prévoir sur les éléments de bois — et qui font partie de son procédé de fabrication même — consistent à ménager les gorges et ce avec des machines simples et peu coûteuses, ce qui permet de réaliser ces éléments à partir de profilés de section standard, découpés à la demande. Pour l'assemblage proprement dit, il y a simplement lieu de choisir entre plusieurs modèles de pièces, également standard, celle dont les languettes ont l'orientation qui convient au mode d'assemblage considéré. Par exemple, pour l'assemblage d'éléments perpendiculaires, on dispose d'un premier modèle de pièce dans lequel les languettes sont orientées suivant deux plans perpendiculaires et pour l'assemblage de planches jointives, on dispose d'un second modèle de pièce dans lequel les languettes sont situées dans un même plan, ou encore dans des plans parallèles.

L'invention sera mieux comprise grâce à la description qui suivra en référence aux dessins annexés, dans lesquels :

- La figure 1 est une vue en perspective d'une forme simplifiée d'un premier type de pièce conforme à l'invention.

- La figure 2 est une vue en perspective illustrant l'assemblage de deux éléments de bois à l'aide d'une pièce du type de la figure 1.

- La figure 3 est une vue en perspective, avec arrachement partiel, d'une première forme de réalisation préférée d'une pièce métallique du type de la figure 1.

- La figure 4 est une vue en plan d'un flan métallique d'une deuxième forme de réalisation d'une pièce du type de la figure 1.

- La figure 5 est une vue en perspective illustrant un second type de pièce conforme à l'invention et un assemblage d'éléments de bois à l'aide de celle-ci.

- La figure 6 est une vue en perspective d'un taquet de montage.

- La figure 7 illustre le montage du taquet de la figure 6.

- La figure 8 représente les sections droites transversales de différents profilés de bois utilisables dans l'invention.

- La figure 9 représente une vue de face et de profil d'un meuble assemblé conformément à l'invention.

- La figure 10 est une vue en coupe selon la ligne x-x du meuble de la figure 9.

0143019

— La figure 11 est une vue en plan d'un flan métallique d'une troisième forme de réalisation d'une pièce du type de la figure 1.

— La figure 12 est une vue en perspective illustrant la troisième forme de réalisation de la pièce de la figure 11.

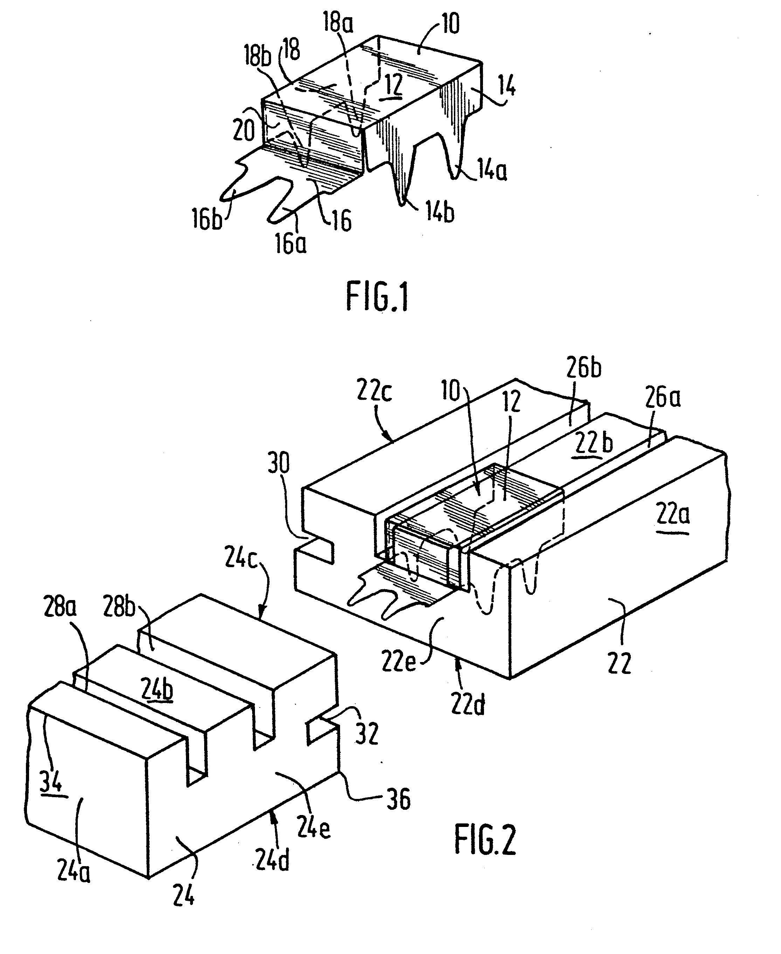

Une pièce (10) (figure 1) destinée à un assemblage à équerre est réalisée à partir d'une feuille métallique découpée et pliée. Elle comprend une base rectangulaire (12) à laquelle sont associées rigidement des languettes (14, 16, 18). Deux de ces languettes (14, 18) parallèles entre elles et similaires sont raccordées le long des grands côtés de la base (12) et repliées à 90° d'un même côté (vers le bas sur la figure). La troisième languette (16), d'une seule pièce, est raccordée à 90° à une facette intermédiaire (20), elle-même raccordée à la base (12) le long de l'un de ses petits côtés et repliés à 90° du même côté que les languettes (14, 18). Les languettes (14, 16, 18) saillent de la base (12) et sont prolongées chacune, à partir de leur bord libre, par des ergots plans notamment deux ergots (14a et 14b, 16a et 16), 18a et 18b) respectivement. La languette (16) et les ergots qui la prolongent (16a, 16b) sont situés sensiblement dans le même plan que les bords libres des languettes (14, 18).

En variante, la pièce (10) peut être moulée, par exemple, en zamak ou en matière plastique résistante.

On se réfère maintenant à la figure 2 sur laquelle sont représentés les deux éléments de bois (22 et 24) devant être assemblés à équerre avec la pièce (10). Ces éléments (22, 24) sont réalisés sous la forme de profilés standard

**0143019**

ayant une section rectangulaire et présentant des faces (22a, 22b, 22c, et 22d, 24a, 24b, 24c et 24d) respectivement, s'étendant dans le sens des fibres du bois. Dans les faces supérieures (22b et 24b) sont ménagées des paires de gorges semblables, droites, parallèles et continues (26a et 26b, 28a et 28b) respectivement, éloignées d'une distance correspondant sensiblement à la largeur de la base (12) de la pièce (10). Les profilés comportent enfin des troisièmes gorges droites et continues (30) et (32) ménagées respectivement le long des faces (22c et 24c) et préférentiellement de mêmes dimensions que les gorges (26a, 26b) notamment en ce qui concerne la profondeur.

Les profilés (22, 24) se terminent par des coupes droites et sont destinés à être assemblés de manière que la face d'extrémité en coupe droite (22d) de l'élément (22) soit contre la face (24c) longitudinale de l'élément (24).

Pour réaliser l'assemblage, on part d'éléments ainsi coupés à longueur et en coupe droite.

Dans une première phase, la pièce (10) est fixée au premier élément (22), en introduisant tout d'abord les languettes (14 et 18), ainsi que les ergots (14a, 14b et 18a, 18b) qui les prolongent, dans les gorges (26a et 26b) de l'élément (22). La pièce est placée de telle manière que la facette intermédiaire (20) soit plaquée contre la face d'extrémité (22d). On force ensuite les ergots (14a, 14b, 18a et 18b) en pénétration dans les fibres du bois en fond des gorges (26a et 26b) jusqu'à ce que la base (12) de la pièce (10) affleure la surface de la face (22b) comprise entre les gorges (26a et 26b). Par conséquent, la distance entre le bord

8

libre de chaque languette (14, 18) et la base (12) est sensiblement égale à la profondeur des gorges (26a, 26b). De préférence, pour éviter que la base (12) ne saille de la face (22b), la zone de cette face comprise entre les deux gorges (26a et 26b) est abaissée d'une épaisseur correspondant à l'épaisseur de la feuille métallique à partir de laquelle est réalisée la pièce (10). Dans une deuxième phase ultérieure, l'élément (22) et la pièce (10) ainsi fixés sont assemblés sur l'élément (24) de la manière suivante : la languette (16) et les ergots (16a, 16b) qui la prolongent sont introduits dans la gorge (32) de la face (24c) de l'élément (24). Puis, les ergots (16a, 16b) sont forcés en pénétration dans les fibres du bois au fond de la gorge (32) jusqu'à venue au contact de la face d'extrémité (22d) de l'élément (22) et de la face (24c) de l'élément (24). Par conséquent, la distance entre le bord libre de la languette (16) et la facette d'extrémité (20) est sensiblement égale à la profondeur de la gorge (32). Pour éviter que l'épaisseur de la facette intermédiaire (20) empêche un contact étroit entre les faces (22d et 24c), la partie de cette dernière face (24c) comprise entre la gorge (32) et l'arête supérieure est située en retrait, d'une distance correspondant sensiblement à l'épaisseur de la facette (20). Naturellement, on réalise l'assemblage de manière que la face (22a) de l'élément (22) et la face d'extrémité (24e) de l'élément (24) soient coplanaires. De plus, la hauteur de la facette intermédiaire (20) est choisie de manière que les faces (22d et 24d) soient coplanaires pour d'évidentes raisons esthétiques. Cependant, il est clair que la présence des gorges continues (26a, 26b, 30, 28a, 28b et 32) rend possible un réglage en continu de la pièce (10) par rapport aux éléments de bois (22 et 24).

De plus, la pièce (10) étant symétrique permet des assemblages entre les éléments (22 et 24) aussi bien à
droite qu'à gauche. Enfin, si les gorges servent de
logement aux languettes (14, 16, 18), il n'y a pas
lieu qu'il y ait ajustement étroit entre les languettes
et les gorges de réception.

Selon une variante non représentée, l'élément (22) et
la pièce (10) qui lui est fixée peuvent être assemblés
à l'élément (24) différemment : la languette (16) et
les ergots (16a et 16b) sont introduits dans la gorges
(28a) de l'élément (24) puis les ergots (16a, 16b) sont
forcés en pénétration dans les fibres du bois en fond
de gorge. Comme précédemment, on prend soin que les
faces (22a et 24e) soient coplanaires, ce qui est atteint
dans la mesure où la distance qui sépare la gorge (28a)
de l'arête voisine (34) est égale à la distance séparant
la gorge (32) de l'arête inférieure (36).

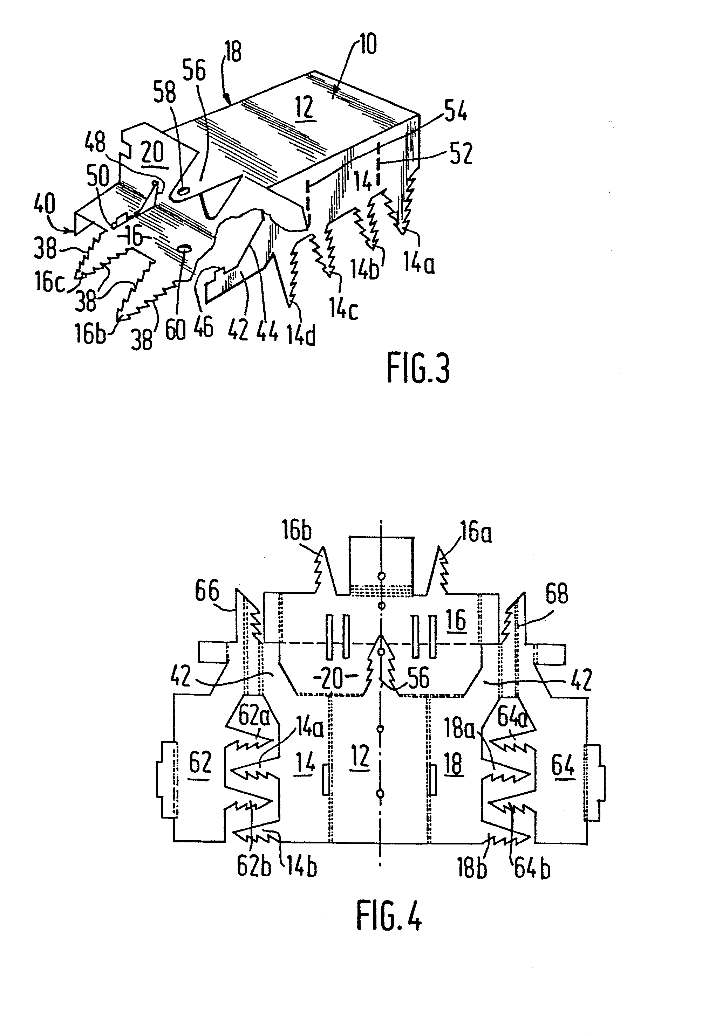

Une première forme de réalisation pratique d'une pièce
du premier type qui vient d'être décrit est illustrée
sur la figure 3. Elle présente les particularités suivantes :

Les ergots qui prolongent la languette (16) sont au
nombre de trois, ont une forme générale pointue et présentent des dentures (38) sur leur flanc.

Aux deux extrémités de la languette (16) sont prévus des
rabats de positionnement (40) coplanaires avec les languettes (14, 18), repliés à 90° vers le bas, à l'opposé
de la base (12) et dont la hauteur correspond à la
largeur des gorges (26a, 26b, 30, 28a, 28b, 32). En
outre, l'un des rabats a également pour fonction
d'obturer l'extrémité de la gorge (32). Enfin, la largeur de la facette (20) est telle que l'autre rabat affleure au fond de la gorge (30).

Les languettes (14, 18) sont prolongées par quatre ergots, également de forme pointue et présentant des indentations sur leur bord, en vue d'un meilleur ancrage dans les fibres du bois. Les extrémités des languettes (14, 18) situées du côté de la facette (20) présentent des excroissances (42) formant potence pour la languette (16). La potence (42) présente un bord oblique (44) à sa racine et un téton (46) en saillie latérale sur son extrémité libre. La facette (20) et la languette (16) comportent une lumière (48) de forme allongée dans laquelle pénètre le bord oblique(44) de la potence (42) pour empêcher ainsi les flexions latérales des languettes (14 et 18). La languette (16) comporte, en outre, un trou (50) dans lequel pénètre le téton (46) de la potence (42), ceci ayant pour résultat de limiter la section de la languette (16).

Comme schématisé par les tirets (52 et 54), la languette (14) est légèrement vrillée, de telle sorte que ses quatre ergots (14a, 14d) soient situés, paire par paire, dans deux plans parallèles écartés d'une distance égale à la largeur des gorges (26a, 26b, 30b). Cette disposition peut être adoptée pour la languette (16) (non représentée).

Enfin, une partie de la facette intermédiaire (20) est découpée et reste dans le prolongement de la base (12) pour former une languette de cloutage (56) dans laquelle est ménagé un trou (58), un second trou (60) étant percé en regard dans la languette (16). La languette de cloutage (56) vient recouvrir la face (24b) de l'élément (24) lors de l'assemblage et l'introduction d'un clou dans les trous (58 et 60) au travers du bois de l'élément (24) assure un verrouillage complémentaire de l'assemblage.

**0143019**

On se réfère maintenant à la figure 4 (deuxième forme de réalisation d'une pièce du premier type). Les tirets simples et doubles correspondent à des lignes de pliage à 90° respectivement vers le haut et vers le bas. Cette forme de réalisation se distingue de la précédente, d'une part, par la présence de deux languettes supplémentaires (62 et 64) également prolongées par des ergots (62a, 62e, 64a, 64e) et raccordées par des lignes de pliage aux potences (42) de telle manière que, lorsque la pièce est mise en forme, ces languettes s'étendent parallèlement aux languettes (14 et 18) respectivement et à une distance égale à la largeur des gorges des profilés.

Elle s'en distingue d'autre part par la présence de deux ergots supplémentaires (66 et 68) s'étendant dans la même direction que les ergots (16a, 16b) de la languette (16) et écartés transversalement de ceux-ci d'une distance égale à la largeur des gorges des profilés. Ces ergots (66, 68) sont situés "à cheval" sur une ligne de pliage, ce qui leur confère une grande rigidité.

La forme particulière des ergots (14a, 14b, 18a, 18b, 62a, 62b, 64a, 64b) est remarquable. En effet, leur flan orienté vers la facette (20) est dépourvu de dents et incliné depuis leur racine vers leur extrémité. Ainsi, lorsque la pièce est fixée au premier profilé (22), au moment de la pénétration à force des ergots dans les fibres du bois, la pièce est sollicitée, du côté où la facette (20) est appliquée contre la face d'extrémité (22e) du profilé. Cette forme peut être utilisée pour la pièce illustrée sur la figure 3.

La deuxième forme de réalisation permet d'obtenir un assemblage plus rigide à dimensions égales qu'avec la première forme de réalisation, ou encore une pièce plus petite à rigidité égale.

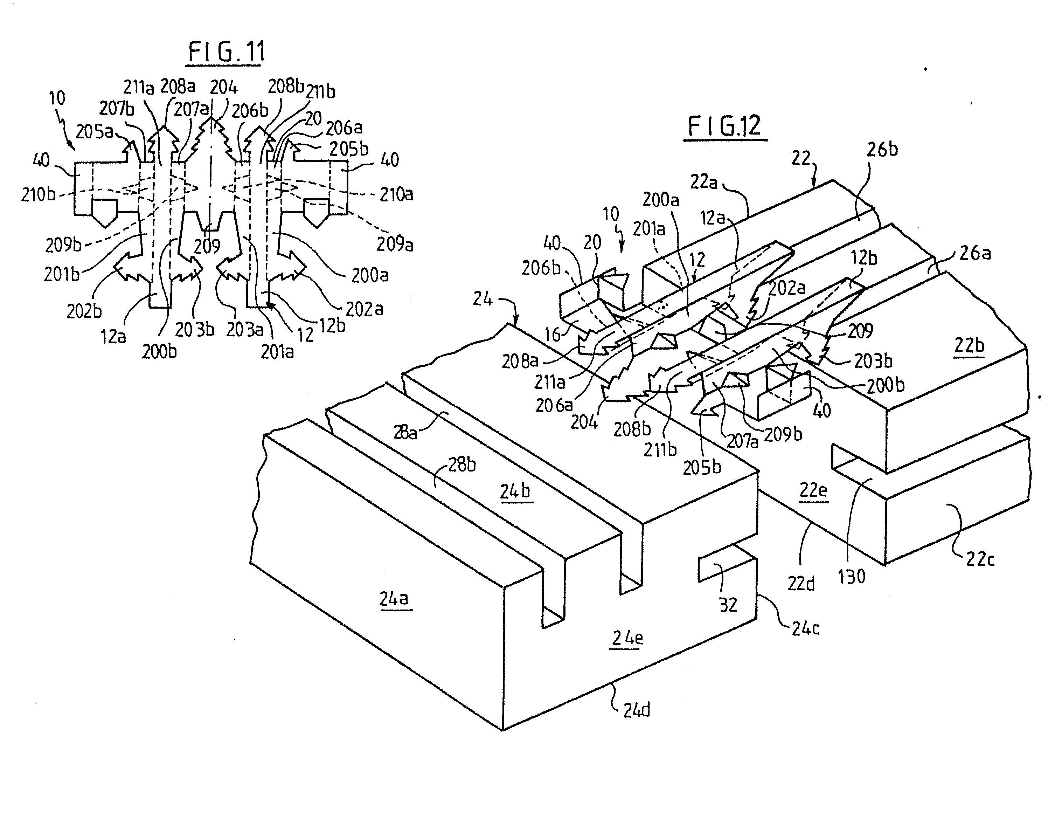

On se réfère maintenant aux figures 11 et 12 illustrant une troisième forme de réalisation de la pièce du premier type, qui se distingue des deux premières par les caractéristiques suivantes :

La base (12) est partagée en deux petites sous-bases (12a, 12b) coplanaires et écartées transversalement. De chacune de ces sous-bases (12a, 12b) sont attenantes deux courtes languettes (200a, 201a, 200b, 201b) prolongées chacune d'elles par un ergot (202a, 203a, 202b, 203b). L'écartement entre chaque paire de languettes correspond à la largeur des gorges des profilés. Les sous-bases (12a, 12b) sont destinées à être logées à plat dans les gorges elles-mêmes, aucune partie de la pièce d'assemblage n'étant appliquée sur la face (22b) de l'élément (22) entre les deux gorges (26a et 26b). Cette disposition permet, d'une part, d'alléger la pièce sans que sa rigidité en souffre, au contraire et, d'autre part, d'éviter que la partie de la face (22b) de l'élément (22) située entre les deux gorges (26a, 26b) ne soit abaissée comme mentionné précédemment. Préférentiellement, les ergots situés à l'intérieur sont plus courts que ceux situés à l'extérieur. Préférentiellement, les languettes (200a, 201a, 200b, 201b) ont une forme générale triangulaire, leur bord libre étant coplanaire des sous-bases (12a, 12b) à leurs extrémités arrière opposées à la languette (16).

La languette (16) est réalisée en trois parties prolongées respectivement par un ergot médian principal (204) et deux ergots secondaires de part et d'autre (205a, 205b). Au lieu que la facette intermédiaire de raccordement (20)

13

0143019

soit d'un seul tenant et perpendiculaire à la fois à
la languette (16) et aux languettes (14 et 18) comme
dans les deux premières variantes décrites, elle est
partagée en quatre tronçons en regard (206a, 206b,
207a, 207b) perpendiculaires à la languette (16) mais
coplanaires avec et prolongeant donc vers l'avant les
languettes (200a, 201a, 200b, 201b). A cet effet, les
deux sous-bases (12a, 12b) sont prolongées également
vers l'avant par deux sous-languettes (211a, 211b),
elles-mêmes prolongées par deux ergots (208a, 208b)
et associées rigidement aux tronçons (206a, 206b, 207a,
207b). Des enfoncés situés à cheval sur la languette
16 et les tronçons (206a, 206b, 207a, 207b), jusqu'aux
sous-bases (12a, 12b) renforcent la rigidité de la
pièce. L'écartement entre la languette (16) et les
deux sous-bases (12a, 12b) correspond à la largeur
des gorges des profilés. Les ergots qu'elles comportent
sont donc écartés transversalement.

Par ailleurs, la pièce comporte également des rabats (40)
mais ceux-ci sont dirigés vers le haut et non vers le
bas, du fait de la configuration de la pièce.

Enfin, la pièce comporte un retour médian 209 attenant
à la partie centrale de la languette (16), perpendiculaire à celle-ci et vers le haut c'est-à-dire vers les
sous-bases (12a, 12b), réalisant le blocage sur la
face d'extrémité (22e) du profilé. Préférentiellement,
deux courts ergots (210a, 210b) sont prévus attenant
aux parties latérales de la languette (16) et à proximité des rabats (40), dirigés vers l'arrière c'est-à-
dire à l'opposé des ergots (208a, 208b) et sensiblement
coplanaires aux sous-bases (12a, 12b) pour venir s'enfoncer dans cette face d'extrémité (22c). Le retour
médian (209) étant beaucoup plus petit que la facette (20),

0143019

cela permet d'éviter que la face (24c) ne présente une partie en retrait, comme précédemment.

Selon une variante non représentée, les dentures des ergots peuvent être réalisées sous forme de "crevés", cette disposition s'appliquant naturellement à toutes les formes de réalisation.

La pièce ainsi réalisée comporte de nombreux plis, ce qui contribue à lui conférer une grande raideur et, par conséquent, une bonne tenue de l'assemblage des éléments (22 et 24).

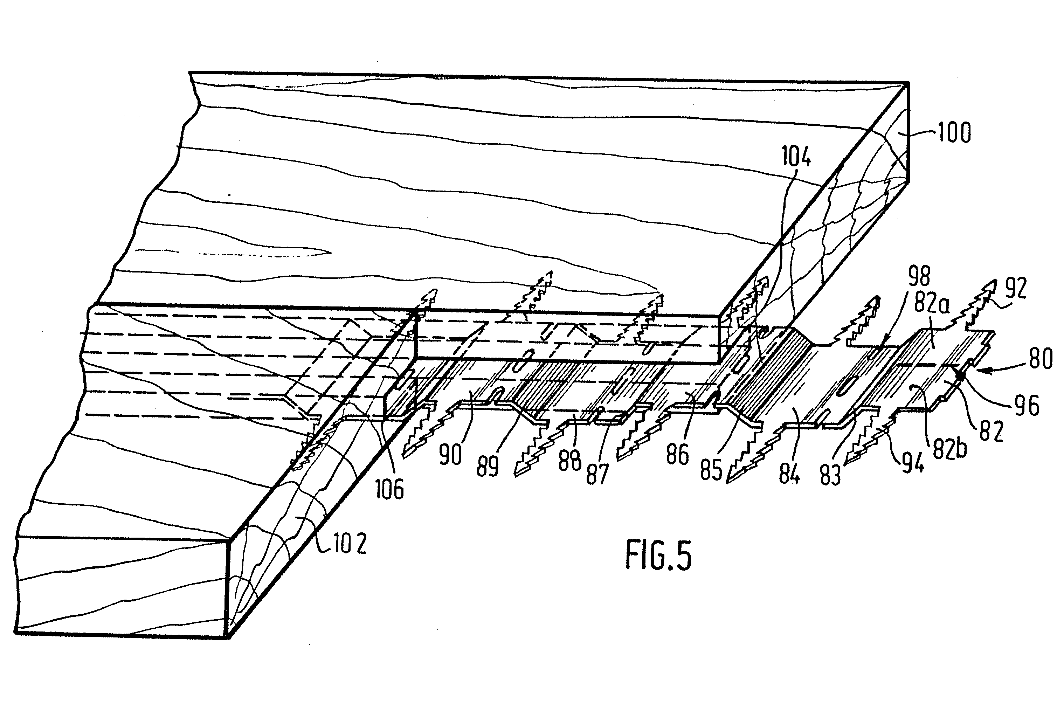

La figure 5 illustre un second type de pièce (80) pour l'assemblage de planches bord à bord et la confection de panneaux. La pièce (80) est réalisée à partir d'une feuille métallique sous forme de bande et se compose d'une succession de plaquettes (82, 84, 86, 88, 90, etc.) situées alternativement dans deux plans parallèles différents et raccordées entre elles par des plans inclinés (83, 85, 87, 89, etc.). Les bords libres opposés de chaque plaquette sont prolongés par des ergots plans (92, 94). Comme symbolisé par la ligne médiane en tirets (96) sur la plaquette (82), on peut considérer que chaque plaquette est constituée de deux languettes (82a et 82b) réunies dos à dos. Enfin, chaque plaquette comporte une rangée de trous (98) pour permettre aux utilisateurs, sans outillage particulier, de découper des pièces métalliques (80) constituées d'un chapelet de plaquettes (82) de longueur prédéterminée, à partir d'une bande de grande longueur.

Le chant de chaque planche à assembler avec la pièce (80) comporte une gorge (104,106) dont la largeur correspond à l'écartement des plans dans lesquels sont situées

0143019

les plaquettes alternées (82, 86, 90 et 84, 88) et dont la profondeur est au moins égale à la largeur des languettes (82a et 82b). L'assemblage des deux planches (100 et 102) est obtenu en introduisant les languettes (82a) et les ergots (92) qui les prolongent dans la gorge (104) de la plaque (100), d'une part, et en introduisant les languettes (82b) et les ergots (94) qui les prolongent dans la gorge (106) de la planche (102), d'autre part, puis en forçant les ergots (92 et 94) en pénétration dans les fibres du bois en fond de gorge, jusqu'à ce que les chants des deux planches soient jointifs.

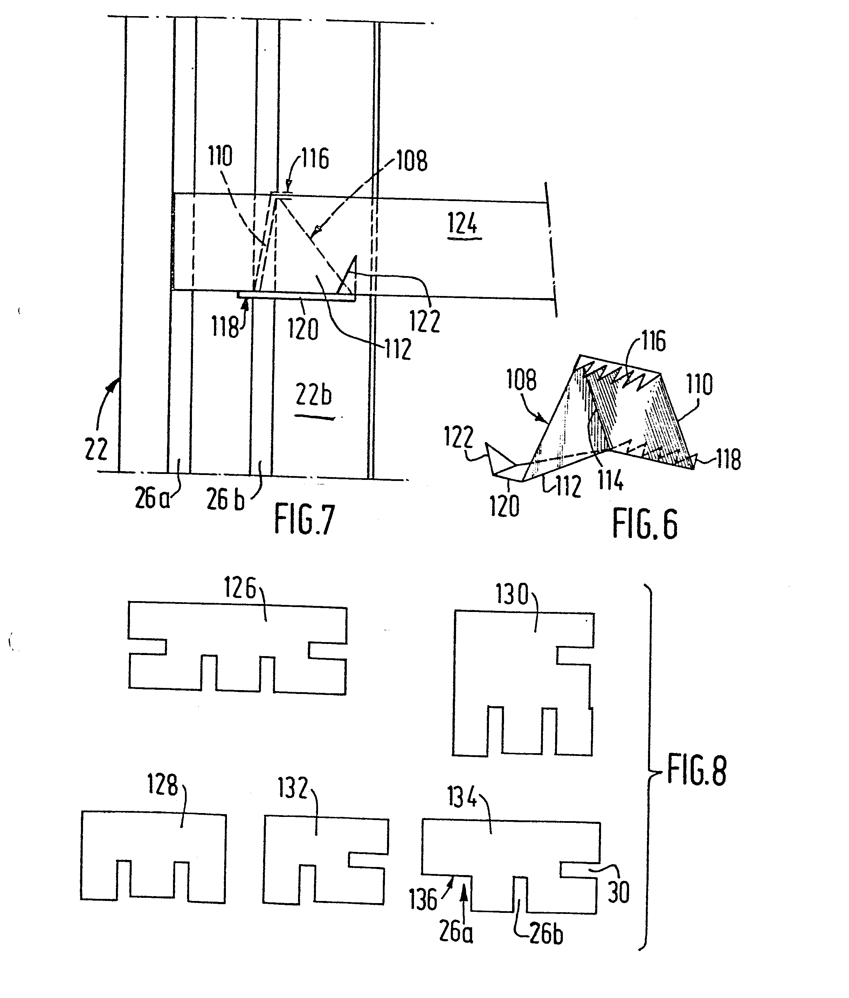

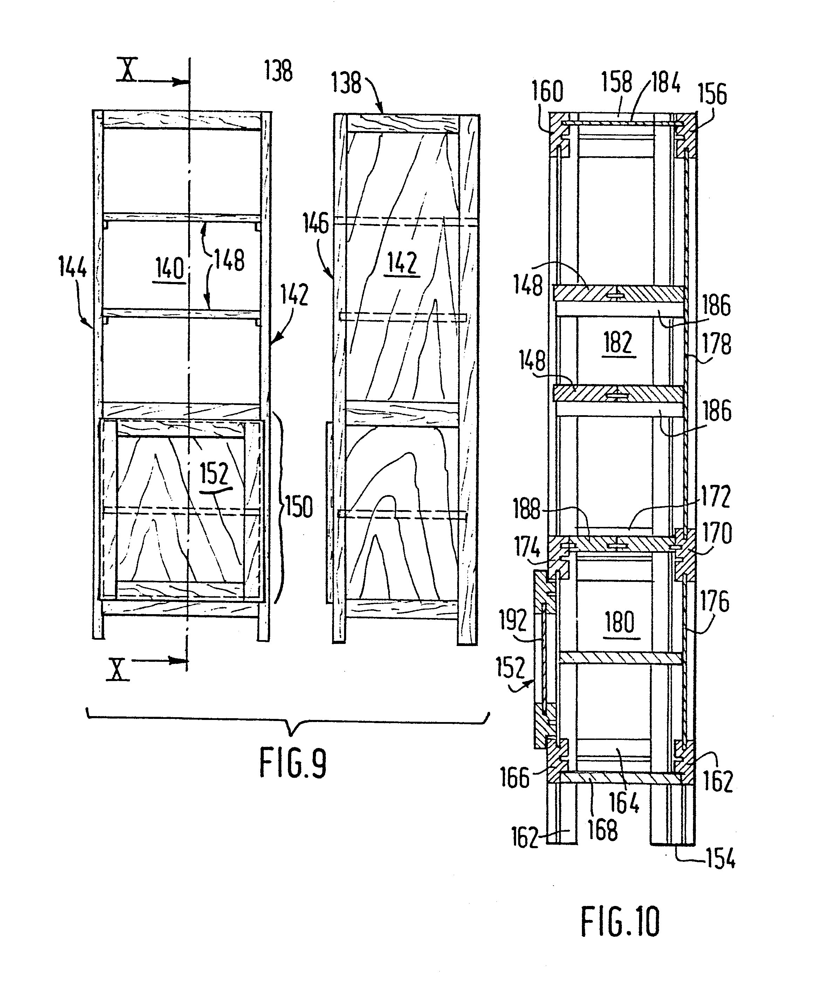

Un taquet de montage (108) (figure 6) est également réalisé à partir d'une feuille métallique et comprend un voile (110) et une potence (112) raccordés l'un à l'autre le long d'une ligne de pliage (114). Le voile (110) est légèrement incliné par rapport à la verticale, lorsqu'on considère la figure 6 et comporte deux rangées de dents supérieures (116) et inférieures (118), sensiblement horizontales, dirigées respectivement vers et à l'opposé de la potence (112). La potence (112) comporte un rabat inférieur horizontal (120) terminé par une griffe verticale (122). Le taquet (108) sert à l'assemblage de tasseaux (124) sur un profilé du type représenté sur la figure 2 ou encore l'un des profilés de la figure 8 lorsque celui-ci est percé verticalement (figure 7). A cet effet, le voile (110) est introduit dans l'une des gorges (26a, 26b) jusqu'à ce que la potence (112) affleure la surface (22b) du profilé. La potence (112) est ensuite ramenée à l'horizontale, ce qui force les dents (116 et 118) à pénétrer dans les fibres du bois des flancs de la gorge (26b). Le tasseau (124) est ensuite mis en position par coulissement du haut vers le bas, le long de la face (22b) du profilé, jusqu'au contact de la partie horizontale (120) de la potence (112), la griffe (122) pénétrant dans les fibres du bois du tasseau (124) et assurant le blocage de celui-ci. Les efforts verticaux appliqués sur le tasseau (124) se transforment en couple de pivotement sur la potence (112) ce qui a pour effet de confirmer l'engagement des dents (116 et 118) dans le profilé (22), par arc-boutement.

La figure 8 illustre d'autres profilés à partir desquels peuvent être réalisés la plupart des modèles de meubles rencontrés couramment.

Le premier profil (126) diffère du profil (22) du fait qu'une gorge est prévue sur chacun des petits côtés du profil rectangulaire. Cela permet notamment la réalisation de bâtis de grandes dimensions nécessitant des montants ou des traverses intermédiaires. Dans le profil (128), il n'est prévu aucune gorge sur les petits côtés. Cela sert dans des assemblages dans lesquels l'élément du bois considéré est fixé seulement à son extrémité. Le profil (130) est analogue au profil (22) mais de section carrée. Il sert notamment lorsque les conditions esthétiques l'exigent (pieds de table, montants de façade d'une armoire, etc.). Le profil (132) ne comporte qu'une seule gorge le long des deux faces adjacentes. Il sert notamment dans des assemblages où l'élément de bois considéré est fixé seulement latéralement. Le profil (134) comporte une feuillure (136) entre la gorge (26a) et le petit côté adjacent. Il sert notamment à la confection de cadres de porte pour lesquels il est nécessaire de disposer d'une telle feuillure.

Un meuble (138) assemblé conformément à l'invention (figures 9 et 10) comporte un fond (140) et des parois latérales (142 et 144) ainsi qu'une façade (146). La façade (146) est ouverte en partie haute où le meuble est équipé d'étagères (148), tandis que la partie basse constitue un placard (150) fermé par une porte de façade (152).

Les deux montants dorsaux (154) sont réalisés avec des profilés de type (22) (figure 2) de même que les traverses supérieures dorsales (156), latérales (158) et frontales (160). Les deux montants frontaux (162) sont réalisés avec un profil du type (132) (figure 8). A chacune de leurs extrémités, les traverses supérieures sont assemblées aux montants frontaux et dorsaux à l'aide de pièces du premier type. Les traverses inférieures dorsales (162), latérales (164) et frontales (166) sont réalisées à partir d'un profil du type (134) (figure 8), leur feuillure (136) étant dirigée vers le bas, pour recevoir une plaque de fond (168).

Au sommet de la partie formant placard, sont prévues des traverses intermédiaires qui sont réalisées pour des traverses dorsales (170) et latérales (172) avec des profilés de type (126) et pour la traverse frontale (172) avec un profilé de type (22).

Les montants et les traverses dorsaux définissent deux cadres rectangulaires superposés, bordés de gorges à leur périphérie, dans lesquelles sont emboîtés des panneaux de fond (176 et 178) tels que des panneaux de contreplaqué dont des panneaux de bois plein amincis à leur périphérie pour que celle-ci présente une épaisseur correspondant à la largeur des gorges.

Les mêmes dispositions se retrouvent pour les parois latérales qui reçoivent, de la même manière, des panneaux d'habillage (180 et 182), ainsi qu'au sommet du meuble où est monté un panneau de fermeture (184). Les étagères (148) disposées à la partie supérieure du meuble sont constituées chacune de planches individuelles assemblées entre elles (figure 5). Ces étagères sont supportées par des tasseaux (186) eux-mêmes supportés par les montants (154 et 156) à l'aide de taquets (108) (figure 7). Au sommet de la partie formant placard, se trouve une tablette (188) réalisée également au moyen de planches élémentaires assemblées entre elles (figure 5) mais qui, au lieu d'être fixées aux montants (154 et 162) à l'aide de tasseaux, sont assemblées aux traverses intermédiaires (170 et 174) à l'aide d'une pièce du type de la pièce (80) (figure 5), cette dernière pénétrant d'un côté dans une gorge ménagée dans le chant de l'une des planches du panneau (188) et de l'autre côté dans l'une des gorges des traverses (170 et 174).

Enfin, la porte (152) comprend un cadre réalisé à l'aide de profilés de type (134), assemblés entre eux à l'aide de pièces selon le premier type, avec emboîtement d'un panneau d'habillage (192) à l'intérieur des gorges dirigées vers l'intérieur du cadre ainsi formé.

Le meuble qui vient d'être décrit ne constitue qu'un exemple et il est évident que d'autres meubles peuvent être réalisés (tables, lits, armoires, buffets, etc.).

L'invention peut également faire l'objet de nombreuses variantes, parmi lesquelles :

- dans le cas où les profilés de bois ont une section trop faible pour que l'on puisse ménager deux gorges côté à côte (figure 2), on peut ne ménager qu'une seule gorge et utiliser des pièces analogues à celles

19

0143019

de la figure 1, mais dans lesquelles l'une des languettes, par exemple la languette (18), est omise,
les ergots (18a, 18b) étant alors raccordés directement le long du bord de la base (12).

— Pour la confection de portes qui doivent être montées
pivotantes sur un bâti, on peut réaliser des pièces
métalliques qui permettent non seulement l'assemblage
des éléments du cadre de la porte, mais également
la fixation des charnières d'articulation, étant
entendu que la pièce d'assemblage peut également
constituer elle-même l'une des parties de la charnière.

— On peut enfin imaginer d'autres formes de pièces
notamment dans le cas où on désire assembler des
éléments de bois suivant des angles quelconques.
L'un des aspects importants de l'invention, à cet
égard, consiste en ce que les pièces d'assemblage
conformes à l'invention présentent au moins deux
languettes saillantes planes prolongées par au moins
un ergot, ces languettes et les ergots étant destinés
à être introduits dans des gorges continues ménagées
sensiblement dans le sens des fibres du bois et
les ergots forcés en pénétration dans le bois,
des moyens de liaison maintenant les deux languettes
dans une orientation relative prédéterminée.

REVENDICATIONS

1. Pièce pour la réalisation d'un assemblage de deux éléments de bois, caractérisée en ce qu'elle comporte au moins une première languette plane saillante, prolongée par au moins un ergot plan en saillie sur son bord libre, prévue pour être introduite dans une gorge de l'un des éléments de bois; au moins une seconde languette plane saillante prolongée par au moins un ergot plan en saillie sur son bord libre, prévue pour être introduite dans une gorge de l'autre élément de bois; et des moyens pour maintenir les première et seconde languettes dans une orientation prédéterminée l'une par rapport à l'autre.

2. Pièce selon la revendication 1 pour réaliser un assemblage à équerre, caractérisée par le fait qu'elle comporte une base (12), la première languette (14, 200a) étant raccordée le long de l'un des bords de ladite base (12) et repliée à 90° par rapport à cette dernière, la seconde languette (16) étant raccordée à la base (12) par l'intermédiaire d'au moins une facette intermédiaire (20) repliée à 90° par rapport à la base (12) et repliée à 90° par rapport à la languette (16).

3. Pièce selon l'une des revendications 1 et 2, caractérisée par le fait que la base (12) a une forme rectangulaire,une languette (18) lui étant associée par pliage à 90°, parallèlement à la languette (16), le long du bord opposé de la base (12).

4. Pièce selon l'une quelconque des revendications 1 à 3, caractérisée par le fait que la facette intermédiaire (20) est d'un seul tenant et s'étend perpendiculairement à la languette (14, 18).

5. Pièce selon l'une quelconque des revendications 1 à 4, caractérisée par le fait que les languettes (14, 16) sont vrillées et comportent chacune au moins deux ergots (14a, 14b, 16a, 16b) s'étendant dans deux

21

0143019

plans espacés d'une distance prédéterminée.

6. Pièce selon l'une quelconque des revendications 1 à 5, caractérisée par le fait que la première languette (14) comporte un prolongement latéral (42) formant potence pour la seconde languette (16).

7. Pièce selon l'une quelconque des revendications 1 à 6, caractérisée par le fait qu'elle comporte une languette (56) située dans le prolongement de la bague (12), comportant un trou (58) en correspondance avec un trou (60) de la languette (16).

8. Pièce selon l'une quelconque des revendications 1 à 7, caractérisée par le fait que chaque languette (14, 18) est flanquée d'une autre languette (62/64) parallèle et également prolongée par des ergots (62a, 62b, 64a, 64b).

9. Pièce selon l'une quelconque des revendications 1 à 8, caractérisée par le fait qu'elle comporte deux ergots supplémentaires (66, 68) s'étendant dans la même direction que les ergots (16a, 16b) mais écartés transversalement de ceux-ci.

10. Pièce selon l'une des revendications 1 et 2, caractérisée par le fait que la base (12) est partagée en deux sous-bases (12a, 12b), de chacune desquelles sont attenantes deux languettes (200a, 201a, 200b, 201b) prolongées chacune par un ergot (202a, 203a, 202b et 203b), la languette (16) étant partagée en plusieurs parties.

11. Pièce selon l'une quelconque des revendications 1, 2 et 10, caractérisée par le fait que la facette intermédiaire (20) est partagée en quatre tronçons coplanaires avec et prolongeant les languettes (200a, 201a, 200b, 201b).

12. Pièce selon l'une quelconque des revendications 1, 2, 10 ou 11, caractérisée par le fait que les deux sous-bases (12a, 12b) se prolongent par deux sous-languettes (211a, 211b), elles-mêmes prolongées par deux

22

0143019

ergots (208a, 208b) écartés transversalement des ergots de la languette (16).

13. Pièce selon l'une quelconque des revendications 1, 2, 10 à 12, caractérisée par le fait qu'elle comporte un retour médian (209) attenant à équerre à la partie centrale de la languette (16).

14. Pièce selon l'une quelconque des revendications 1, 2, 10 à 13, caractérisée par le fait qu'elle comporte deux ergots (210a, 210b) attenants aux parties latérales de la languette (16), dirigés à l'opposé des ergots (208a, 208b) et sensiblement coplanaires aux sous-bases (12a, 12b).

15. Pièce selon l'une quelconque des revendications 1 à 14, caractérisée par le fait qu'aux deux extrémités de la languette (16) sont prévus des rabats (40).

16. Pièce selon la revendication 1 pour réaliser un assemblage coplanaire, caractérisée par le fait que les languettes (82a, 82b) sont réunies dos à dos et constituent ensemble une plaque plane (82) unique.

17. Pièce selon l'une des revendications 1 et 16, caractérisée par le fait qu'elle comprend une multiplicité de plaques (82, 84, 86, 88, 90) raccordées en série.

18. Pièce selon la revendication 17, caractérisée par le fait que les plaques (82-90) s'étendent alternativement dans deux plans parallèles espacés d'une distance prédéterminée et raccordés entre eux par des pans inclinés (83, 85, 87, 89).

19. Pièce selon la revendication 18, caractérisée par le fait que chaque plaque (82-90) comporte une rangée de trous (98) permettant d'obtenir, par découpe, une pièce comportant un nombre prédéterminé de plaques (82-90).

20. Pièce selon l'une quelconque des revendications 1 à 19, caractérisée par le fait qu'elle est réalisée à partir d'une feuille métallique unique.

23

0143019

21. Pièce selon l'une quelconque des revendications 1 à 19, caractérisée par le fait qu'elle est réalisée par moulage.

22. Pièce selon l'une quelconque des revendications 1 à 21, caractérisée par le fait que les ergots ont une forme effilée.

23. Pièce selon l'une quelconque des revendications 1 à 22, caractérisée par le fait que les ergots présentent des indentations latérales.

24. Procédé d'assemblage d'éléments de bois à l'aide de pièces selon l'une quelconque des revendications 1 à 23, caractérisé par les étapes suivantes :
- on ménage sur au moins deux éléments de bois à assembler (22, 24, 100, 102), une gorge continue (26a, 32, 104, 106) dans le sens des fibres du bois;
- on coupe les éléments de bois à longueur, selon une coupe droite;
- on assemble la pièce (10, 80) au premier élément de bois (22, 100) en introduisant l'une des languettes (14, 82a) et les ergots (14a, 14b, 92) qui la prolongent dans la gorge (26a, 104) de ce premier élément, puis en forçant lesdits ergots en pénétration dans le bois en fond de gorge;
- on assemble le premier élément et la pièce ainsi assemblés au second élément de bois (24, 102) en introduisant l'autre languette (16, 82b) et les ergots (16a, 16b, 94) qui la prolongent dans la gorge (32, 106) de ce second élément puis en forçant lesdits ergots en pénétration dans le bois en fond de gorge.

25. Elément de bois pour la mise en oeuvre du procédé selon la revendication 24 à l'aide d'une pièce selon l'une quelconque des revendications 1 à 23, se présentant sous la forme d'un profilé de section sensiblement rectangulaire ou carrée et s'étendant sensiblement dans la direction des fibres du bois, caractérisé en ce qu'il comporte sur deux de ses faces adjacentes (22b, 22c) au moins deux gorges (26a, 30) droites, de profil identique, continues, les deux gorges (26a, 30) étant situées à la même distance des arêtes diagonalement opposées de l'élément de bois.

26. Elément de bois selon la revendication 25, caractérisé par le fait qu'il comporte sur l'une de ses faces (22b) au moins une seconde gorge (26b) parallèle à la première gorge (26a) et de même profil que celle-ci.

0143019

FIG.1

FIG.2

0143019

FIG.3

FIG.4

FIG.5

FIG.7

FIG.6

FIG.8

5/6

0143019

FIG.9

FIG.10

FIG.11

FIG.12

Office européen
des brevets

**RAPPORT DE RECHERCHE EUROPEENNE**

EP 84 40 1865

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| Y | US-A-3 967 524 (K.T. SNOW et al.) <br><br> * Colonne 2, lignes 1-19; figure 1 * | 1,16, 20,22 24 | F 16 B 15/00 <br> E 04 B 1/49 |
| Y | US-A-2 569 532 (F.W. MARSHALL et al.) <br><br> * Colonne 2, lignes 28-40; figures 1,3 * | 1,16, 20,22 24 | |
| A | FR-A-1 346 708 (SANFORD INDUSTRIES INC.) <br> * Page 3, colonne de droite, lignes 26-58; page 4, colonne de gauche, lignes 1-21; figures 11-14 * | 17-19 | |

- - -

- - -

- - - - -

| DOMAINES TECHNIQUES RECHERCHES (Int. Cl.4) |
|---|
| F 16 B <br> E 04 B <br> B 27 F <br> E 04 F |

Le présent rapport de recherche a été établi pour toutes les revendications

| Lieu de la recherche | Date d'achèvement de la recherche | Examinateur |
|---|---|---|
| LA HAYE | 14-12-1984 | VAN WESTENBRUGGE A. |